# EUROPÄISCHE PATENTSCHRIFT

(11) **EP 1 621 438 B1**
(45) Veröffentlichungstag und Bekanntmachung des Hinweises auf die Patenterteilung: **21.11.2007**
(21) Anmeldenummer: 05104839.5
(22) Anmeldetag: 03.06.2005
(51) Int. Cl.: B60W 10/04, B60W 10/18, B60W 30/18, F16H 63/48

(54) **Verfahren und Vorrichtung zur Beeinflussung des Motormoments während der Entriegelung einer automatisierten Parkbremse**
Engine torque control method and device during release of parking brake
Procédé et dispositif de commande du couple moteur pendant le deverrouillage d'un frein de stationnement

(30) Priorität: 06.07.2004 DE 102004032539
(43) Veröffentlichungstag der Anmeldung: 01.02.2006
(73) Patentinhaber: ROBERT BOSCH GMBH, 70442 Stuttgart (DE)
(72) Erfinder: Baisch, Frank, 70806 Kornwestheim (DE)

(56) Entgegenhaltungen:
- EP-A- 1 300 307
- EP-A- 1 327 566
- WO-A-81/00696
- DE-U1- 20 303 511

## Beschreibung

### Stand der Technik

Die Erfindung betrifft ein Verfahren zur Beeinflussung des Motormoments während eines Anfahrvorgangs eines mit einer automatisierten Parkbremse ausgestatteten Fahrzeugs.

Aus der DE 196 20 344 A1 ist eine kombinierte Betriebs- und Feststellbremsanlage insbesondere für Kraftfahrzeuge mit einer hydraulisch zuspannbaren, kombinierten Betriebs- und Feststellbremse bekannt, welche über eine mechanische Verriegelungsvorrichtung verfügt. Die mechanische Verriegelungsvorrichtung ist elektrisch betätigbar und erfüllt damit in einfacher Weise die Feststellfunktion der hydraulisch zugespannten, kombinierten Betriebs- und Feststellbremse. Ausgelöst und dosiert wird die Feststellbremse vom Fahrer durch einen Feststellbremsschalter.

Die WO 81/00696 A zeigt eine manuelle Parkbremse. Ein Anfahren bei geschlossener Bremse wird unterbunden. Die EP-A-1 327 566 beschreibt eine automatisierte Parkbremse, bei der Öffnungsparameter der Bremse in Abhängigkeit von der Neigung der Fahrbahn eingestellt werden.

### Vorteile der Erfindung

Die Erfindung betrifft ein Verfahren zur Beeinflussung des Motormoments während eines Anfahrvorgangs eines mit einer automatisierten Parkbremse ausgestatteten Fahrzeugs, bei dem das Motormoment während des Entriegelungsprosesses abhängig vom Entriegelungszustand der automatisierten Parkbremse ist. Dadurch wird ein komfortabler und fahrzeugschonender Anfahrvorgang ermöglicht.

Eine vorteilhafte Ausgestaltung der Erfindung ist dadurch gekennzeichnet, dass abhängig vom Entriegelungszustand der automatisierten Parkbremse der Betrag oder die Anstiegsgeschwindigkeit des Motormoments begrenzt wird

Eine vorteilhafte Ausgestaltung der Erfindung ist dadurch gekennzeichnet, dass das Motormoment solange abhängig vom Entriegelungszustand der automatisierten Parkbremse ist, bis der Bremsdruck in wenigstens einem Radbremszylinder einen vorgegebenen Wert unterschritten hat. Dadurch ist es möglich, dass erst bei schwacher Bremswirkung die Beeinflussung des Motormoments vollständig auf den Fahrer übergeht.

Eine vorteilhafte Ausgestaltung der Erfindung ist dadurch gekennzeichnet, dass das Motormoment zu Beginn eines Anfahrvorgangs mit aktivierter automatisierter Parkbremse auf einen von der Fahrpedalbetätigung des Fahrers unabhängigen Wert begrenzt wird. Dadurch kann eine übermäßige Belastung des Fahrzeugs bei aktivierter Parkbremse und zugleich hoher Momentenanforderung durch den Fahrer vermieden werden.

Eine vorteilhafte Ausgestaltung der Erfindung ist dadurch gekennzeichnet, dass zum Entriegeln der automatisierten Parkbremse der Bremsdruck in wenigstens einem Radbremszylinder zunächst erhöht und danach vollständig bzw. nahezu vollständig abgebaut wird.

Eine vorteilhafte Ausgestaltung der Erfindung ist dadurch gekennzeichnet, dass die Erhöhung des Bremsdrucks im Radbremszylinder ausgehend von demjenigen Druckwert erfolgt, welcher bei verriegelter automatisierter Parkbremse im Radbremszylinder vorliegt. Insbesondere kann die Parkbremse so ausgestaltet sein, dass bei verriegelter Parkbremse kein Bremsdruck im Radbremszylinder vorliegt. Dadurch wird eine hydraulische Dauerbeanspruchung der automatisierten Parkbremse vermieden.

Eine vorteilhafte Ausgestaltung der Erfindung ist dadurch gekennzeichnet, dass
- das Motormoment solange konstant gehalten oder linear erhöht wird, bis die Erhöhung des Bremsdrucks in wenigstens einem Radbremszylinder abgeschlossen ist und
- anschließend eine weitere Erhöhung des Motormoments derart stattfindet, dass dann, wenn der Entriegelungsvorgang der automatisierten Parkbremse ein vorgegebenes Stadium erreicht hat, das Motormoment den Wert des vom Fahrer über das Fahrpedal angeforderten Motormoments annimmt.

Bei diesem Stadium kann es sich insbesondere um das Unterschreiten eines vorgegebenen Bremskraftniveaus oder Bremsdruckniveaus handeln.

Weiter umfasst die Erfindung eine Vorrichtung zur Beeinflussung des Motormoments während eines Anfahrvorgangs eines mit einer automatisierten Parkbremse ausgestatteten Fahrzeugs, enthaltend
- ein Parkbremsensteuergerät sowie
- ein Motorsteuergerät, welches vom Parkbremsensteuergerät derartige Steuersignale erhält, dass das eingestellte Motormoment während des Entriegelungsprozesses abhängig vom Entriegelungszustand der automatisierten Parkbremse ist.

Eine vorteilhafte Ausgestaltung der Erfindung ist dadurch gekennzeichnet, dass das Parkbremsensteuergerät im Steuergerät einer Fahrdynamikregelung enthalten ist.
Dadurch dass das Steuergerät einer Fahrdynamikregelung über die Funktionalität eines fahrerunabhängigen Druckaufbaus verfügt, kann die Ansteuerung einer automatisierten Parkbremse ohne wesentlichen Zusatzaufwand darin integriert werden.

Die vorteilhaften Ausgestaltungen des erfindungsgemäßen Verfahrens äußern sich selbstverständlich auch als vorteilhafte Ausgestaltungen der erfindungsgemäßen Vorrichtung und umgekehrt.

### Zeichnung

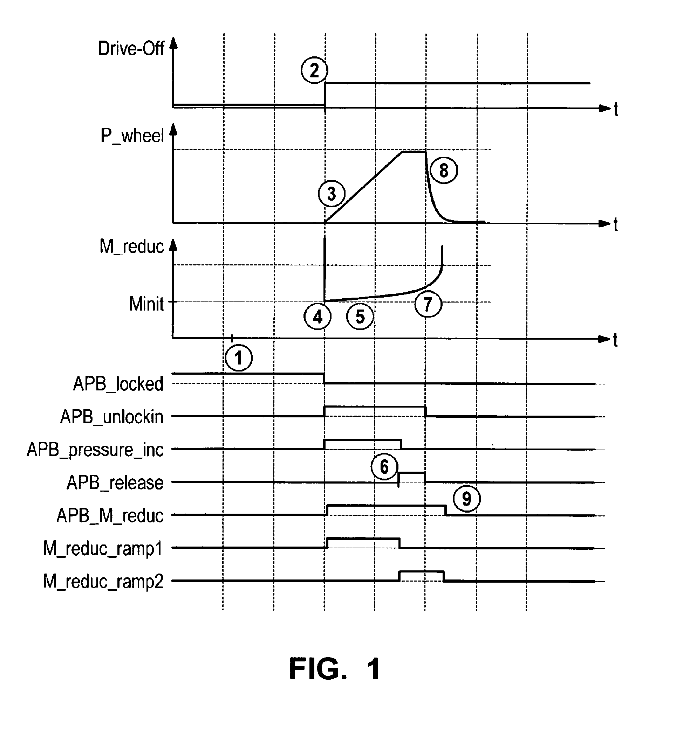

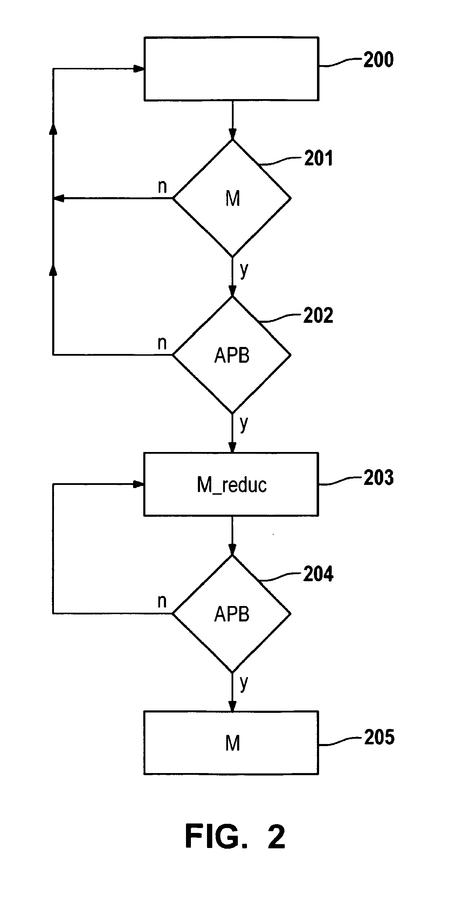

Die Zeichnung besteht aus den Figuren 1 und 2.

Figur 1 zeigt verschiedene Größen als Funktionen der Zeit bei einer Ausführungsform des erfindungsgemäßen Verfahrens.

Figur 2 zeigt den Ablauf des erfindungsgemäßen Verfahrens.

### Ausführungsbeispiele

Bei der automatisierten Parkbremse (APB) kann über ein Bedienelement (Knopf, Taster,...) eine automatische Entriegelung vorgenommen werden. Ebenso wird nach einem erkannten Anfahrwunsch automatisch entriegelt. Für die Entriegelung der APB ist ein Druckaufbau innerhalb der Radbremszylinder auf einen derartigen Wert erforderlich, dass die dadurch aufgebaute hydraulische Bremskraft der mechanisch aufgebrachten Bremskraft bei der aktivierten APB entspricht oder diese sogar überschreitet.

Aufgrund des zur Verriegelung notwendigen Druckaufbaus kommt es zu einer zeitlichen Verzögerung, bis die APB gelöst ist. Deshalb können bei einem erkannten Anfahrwunsch des Fahrers (z.B. über die Fahrbedalbetätigung) positive Antriebsmomente und gegengerichtete Bremsmomente gegeneinander wirken. Dabei steigt der Betrag der Bremsmomente wegen des Druckaufbaus zur Entriegelung zunächst an. Diese gegeneinander wirkenden Momente bzw. Kräfte können zu Verspannungen im Fahrwerk führen. Wird das Fahrzeug bei Erreichen des nötigen Druckes (Verriegelungsdruck + ca. 10 bar) entriegelt, lösen sich diese Verspannungen schlagartig. Für den Fahrer ist dieser Entriegelungsvorgang durch einen sehr unkomfortablen Ruck wahrnehmbar. Ebenso werden die beteiligten Systemkomponenten starken Belastungen ausgesetzt.

Durch den erfindungsgemäßen gezielten Eingriff in das Motormanagement wird der Vorgang des Entriegelns sowohl für den Fahrer komfortabel als auch für die beteiligten Komponenten schonend durchgeführt. Es wird bereits im Ansatz verhindert, dass ein zu großes Motormoment aufgebaut wird. Der erfindungsgemäße Eingriff in das Motormanagement kann zur Komfortverbesserung auch für APB-Systeme angewandt werden, welche nach einem anderen Funktionsprinzip arbeiten und bei denen kein Bremsmomentenaufbau für die Entriegelung notwendig ist.

Der Ablauf einer Ausführungsform des erfindungsgemäßen Verfahrens wird anhand von Fig. 1 erläutert. In Fig. 1 sind verschiedene Größen jeweils als Funktion der Zeit aufgetragen.

In Abszissenrichtung ist jeweils die Zeit t aufgetragen, in Ordinatenrichtung sind von oben nach unten die folgenden Größen aufgetragen:
Drive-Off: Anfahrwunsch des Fahrers (Drive-Off = 0: kein Anfahrwunsch, Drive-Off =1: Anfahrwunsch)
P_wheel: Druck im Radbremszylinder
M_reduc: Motormoment
APB_locked: Status der APB (1: aktiviert 0: nicht aktiviert bzw. Entriegelungsprozess läuft)
APB_unlockin: Status des Entriegelungsprozesses (0: Entriegelungsprozess läuft nicht, 1: Entriegelungsprozess läuft)
APB_pressure_inc: Status des Druckaufbaus während des Entriegelungsprozesses (0: kein aktiver Druckaufbau, 1: aktiver Druckaufbau)
ABR_release: Status der mechanischen Löseprozesses der APB (0: mechanischer Lösevorgang der ABP läuft nicht, 1: mechanischer Lösevorgang der APB läuft) APB_M_reduc: Momentenreduzierung (0: Momentenreduzierung nicht aktiv, 1:
Momentenreduzierung aktiv)
M_reduc_ramp1: erste Rampenfunktion (0: erste Rampenfunktion nicht aktiv, 1: erste Rampenfunktion aktiv)
M_reduc_ramp2: zweite Rampenfunktion (0: zweite Rampenfunktion nicht aktiv, 1:
zweite Rampenfunktion aktiv)

Das zum Zeitpunkt 1 verriegelte APB-System wird bei Erkennung des Fahreranfahrwunsches zum Zeitpunkt 2 automatisch entriegelt. Während des zur Entriegelung nötigen Druckaufbaus im Bremssystem (mit 3 gekennzeichnet) wird die Begrenzung des Motormoments mit einem Initialisierungswert Minit aktiviert (mit 4 gekennzeichnet). Die Begrenzung des Motormoments kann über eine Schnittstelle zwischen dem APB-Steuergerät (welches in einem ESP-Steuergerät enthalten sein kann) und dem Motorsteuergerät durchgeführt werden. Der Parametersatz "Rampe 1" für die Motormomentbegrenzung wird aktiviert, solange ein Druckanstieg P_wheel erfolgt. Dieser stellt einen nur geringfügigen Anstieg des Motormoments M_reduc sicher. Dies ist in Fig. 1 mit 5 gekennzeichnet. Bei Erreichen des für die Entriegelung notwendigen Systemdrucks wird die mechanische Parkbremse gelöst. Dieser Zeitpunkt ist mit 6 gekennzeichnet. Anschließend kann mit einem weiteren Parametersatz "Rampe 2" der Übergang der Zustände "Motormomentenbegrenzung aktiv" und "Motormomentenbegrenzung nicht aktiv" beeinflusst werden. Dieser Bereich ist mit 7 gekennzeichnet. Bei Erreichen bzw. Unterschreiten eines Druckschwellenwertes durch den Druck im Radbremszylinder wird die Motormomentenbegrenzung deaktiviert (mit 8 bezeichnet). Dieser Druckschwellenwert ist hoch genug gewählt, so dass kein weiterer Übergang in den Zustand "Motormomentenbegrenzung nicht aktiv" nötig ist. Ab dem Zeitpunkt 9 wird kein Motormoment M_reduc mehr vorgegeben. Der Parameter Minit sowie die Parametersätze für die Rampenfunktionen können auch abhängig vom Fahrzeugverhalten, Fahrbahneigenschaften oder weiteren Größen gewählt werden.

Der Ablauf einer Ausführungsform des erfindungsgemäßen Verfahrens ist in Fig. 2 dargestellt. Nach dem Start in Block 200 wird in Block 201 abgefragt, ob ein Anfahrwunsch des Fahrers vorliegt. Dies kann beispielsweise über eine Abfrage des über das Fahrpedal vom Fahrer angeforderten Motormoments M erfolgen. Lautet die Antwort "Nein" (in Fig. 2 stets mit "n" gekennzeichnet), d.h. es liegt kein Anfahrwunsch vor, dann wird zu Block 200 zurückgegangen. Lautet die Antwort "Ja" (in Fig. 2 stets mit "y" gekennzeichnet), dann wird anschließend in Block 202 abgefragt, ob die APB aktiviert ist. Lautet die Antwort "Nein", dann wird zu Block 200 zurückverzweigt. Lautet die Antwort "Ja", dann wird in Block 203 anstelle des vom Fahrer angeforderten Motormoments das Motormoment M_reduc eingestellt. Anschließend wird in Block 204 abgefragt, ob der Entriegelungsvorgang der APB bereits ein vorgegebenes Stadium erreicht hat (z.B. Bremskraft unterschreitet Grenzwert,...). Lautet die Antwort "Nein", dann wird zu Block 203 zurückgekehrt und weiterhin das reduzierte Motormoment M_reduc eingestellt. Lautet die Antwort "Ja", dann wird in Block 205 das vom Fahrer angeforderte Motormoment anstelle von M_reduc eingestellt.

## Patentansprüche

1. Verfahren zur Beeinflussung des Motormoments (M) während eines Anfahrvorgangs eines mit einer automatisierten Parkbremse ausgestatteten Fahrzeugs, bei dem das Motormoment (M_reduc) während des Entriegelungsprozesses abhängig vom Entriegelungszustand der automatisierten Parkbremse ist.

2. Verfahren nach Anspruch 1, **dadurch gekennzeichnet, dass** abhängig vom Entriegelungszustand der automatisierten Parkbremse der Betrag oder die Anstiegsgeschwindigkeit des Motormoments begrenzt wird.

3. Verfahren nach Anspruch 1, **dadurch gekennzeichnet, dass** das Motormoment solange abhängig vom Entriegelungszustand der automatisierten Parkbremse ist, bis der Bremsdruck in wenigstens einem Radbremszylinder (P_wheel) einen vorgegebenen Wert unterschritten hat.

4. Verfahren nach Anspruch 1, **dadurch gekennzeichnet, dass** das Motormoment zu Beginn eines Anfahrvorgangs mit aktivierter automatisierter Parkbremse (Minit) auf einen von der Fahrpedalbetätigung des Fahrers unabhängigen Wert begrenzt wird.

5. Verfahren nach Anspruch 1, **dadurch gekennzeichnet, dass** zum Entriegeln der automatisierten Parkbremse der Bremsdruck (P_wheel) in wenigstens einem Radbremszylinder zunächst erhöht und danach vollständig bzw. nahezu vollständig abgebaut wird.

6. Verfahren nach Anspruch 5, **dadurch gekennzeichnet, dass** die Erhöhung des Bremsdrucks im Radbremszylinder (P_wheel) ausgehend von demjenigen Druckwert erfolgt, welcher bei verriegelter automatisierter Parkbremse im Radbremszylinder vorliegt.

7. Verfahren nach Anspruch 6, **dadurch gekennzeichnet, dass** bei verriegelter automatischer Parkbremse kein Bremsdruck im Radbremszylinder vorliegt.

8. Verfahren nach Anspruch 5, **dadurch gekennzeichnet, dass**
- das Motormoment (M_reduc) solange konstant gehalten oder linear erhöht wird, bis die Erhöhung des Bremsdrucks in wenigstens einem Radbremszylinder abgeschlossen ist und
- anschließend eine weitere Erhöhung des Motormoments derart stattfindet, dass dann, wenn der Entriegelungsvorgang der automatisierten Parkbremse ein vorgegebenes Stadium erreicht hat, das Motormoment den Wert des vom Fahrer über das Fahrpedal angeforderten Motormoments annimmt.

9. Vorrichtung zur Beeinflussung des Motormoments während eines Anfahrvorgangs eines mit einer automatisierten Parkbremse ausgestatteten Fahrzeugs, enthaltend
ein Parkbremsensteuergerät sowie
ein Motorsteuergerät, welches vom Parkbremsensteuergerät derartige Steuersignale erhält, dass
das eingestellte Motormoment während des Entriegelungsprozesses abhängig vom Entriegelungszustand der automatisierten Parkbremse ist.

10. Vorrichtung nach Anspruch 9, **dadurch gekennzeichnet, dass** das Parkbremsensteuergerät im Steuergerät einer Fahrdynamikregelung enthalten ist.

## Claims

1. Method for controlling the engine torque (M) during a starting process of a vehicle which is equipped with an automatic parking brake and in which during the release process the engine torque (M_reduc) is dependent on the released state of the automatic parking brake.

2. Method according to Claim 1, **characterized in that** the absolute value or the rate of increase of the engine torque is limited as a function of the released state of the automatic parking brake.

3. Method according to Claim 1, **characterized in that** the engine torque is dependent on the released state of the automatic parking brake until the brake pressure in at least one wheel brake cylinder (P_wheel) has dropped below a predefined value.

4. Method according to Claim 1, **characterized in that** the engine torque at the start of a starting process with the automatic parking brake (Minit) activated is limited to a value which is independent of the accelerator pedal activation by the driver.

5. Method according to Claim 1, **characterized in that**, in order to release the automatic parking brake, the brake pressure (P_wheel) in at least one wheel brake cylinder is firstly increased and then completely eliminated or virtually completely eliminated.

6. Method according to Claim 5, **characterized in that** the increase in the brake pressure in the wheel brake cylinder (P_wheel) occurs starting from that pressure value which is present in the wheel brake cylinder when the automatic parking brake is locked.

7. Method according to Claim 6, **characterized in that** when the automatic parking brake is locked no brake pressure is present in the wheel brake cylinder.

8. Method according to Claim 5, **characterized in that**
- the engine torque (M_reduc) is kept constant or increased linearly until the increase in the brake pressure in at least one wheel brake cylinder is terminated, and
- a further increase in the engine torque subsequently takes place in such a way that when the release process of the automatic parking brake has reached a predefined state the engine torque assumes the value of the engine torque which has been requested by the driver by means of the accelerator pedal.

9. Device for controlling the engine torque during a starting process of a vehicle which is equipped with an automatic parking brake, containing
a parking brake control device and
an engine control device which receives control signals from the parking brake control device in such a way that
the engine torque which is set during the release process is dependent on the released state of the automatic parking brake.

10. Device according to Claim 9, **characterized in that** the parking brake control device is contained in the control device of a vehicle movement dynamics controller.

## Revendications

1. Procédé pour influencer le couple moteur (M) pendant une phase de démarrage d'un véhicule équipé d'un frein de stationnement automatisé selon lequel le couple moteur (M-reduc) dépend de l'état de déverrouillage du frein de stationnement automatisé pendant l'opération de déverrouillage.

2. Procédé selon la revendication 1,
**caractérisé en ce qu'**
on limite l'amplitude ou la vitesse d'augmentation du couple moteur en fonction de l'état de déverrouillage du frein de stationnement automatisé.

3. Procédé selon la revendication 1,
**caractérisé en ce qu'**
le couple moteur dépend de l'état de déverrouillage du frein de stationnement automatisé aussi longtemps que la pression de frein dans au moins un cylindre de frein de roue (P-wheel) est inférieure à une valeur prédéfinie.

4. Procédé selon la revendication 1,
**caractérisé en ce qu'**
au début d'une phase de démarrage avec un frein de stationnement automatisé, activé, (Minit) le couple moteur est limité à une valeur indépendante de l'actionnement de la pédale d'accélérateur par le conducteur.

5. Procédé selon la revendication 1,
**caractérisé en ce que**
pour déverrouiller le frein de stationnement automatisé, on augmente tout d'abord la pression de frein (P-wheel) dans au moins un cylindre de frein de roue puis on la réduit totalement ou pratiquement totalement.

6. Procédé selon la revendication 5,
**caractérisé en ce que**
l'augmentation de la pression de frein dans un cylindre de frein de roue (P-wheel) se fait en partant de la valeur de pression respective dans le cylindre de frein de roue lorsque le frein de stationnement automatisé est déverrouillé.

7. Procédé selon la revendication 6,
**caractérisé en ce que**
pour un frein de stationnement automatisé, verrouillé, il n'y a aucune pression de frein dans le cylindre de frein de roue.

8. Procédé selon la revendication 5,
**caractérisé en ce qu'**
on maintient constant ou on augmente de façon linéaire le couple moteur (M-reduc) jusqu'à ce que l'augmentation de la pression de frein dans au moins un cylindre de frein de roue soit terminée et
ensuite on poursuit l'augmentation du couple moteur de sorte que lorsque l'opération de déverrouillage du frein de stationnement automatisé atteint un stade prédéfini, le couple moteur prend la valeur du couple moteur demandée par le conducteur par l'intermédiaire de la pédale d'accélérateur.

9. Dispositif pour influencer le couple moteur pendant une phase de démarrage d'un véhicule équipé d'un frein de stationnement automatisé comprenant :
- un appareil de commande de frein de stationnement et
- un appareil de commande de moteur recevant des signaux de commande de l'appareil de commande de frein de stationnement de façon que
le couple moteur réglé dépende de l'état de déverrouillage du frein de stationnement automatisé pendant la phase de déverrouillage.

10. Dispositif selon la revendication 9,
**caractérisé en ce que**
l'appareil de commande de frein de stationnement se trouve dans l'appareil de commande d'une régulation de dynamique de roulage.
